# DEMANDE DE BREVET EUROPEEN

(11) **EP 1 441 135 A1**
(43) Date de publication de la demande: **28.07.2004**
(21) Numéro de dépôt: 04100116.5
(22) Date de dépôt: 15.01.2004
(51) Int. Cl.: F16C 19/28, F16H 1/28, F16H 57/02

(54) **AGENCEMENT DE MONTAGE D'UN SATELLITE EPICYCLOIDAL**

(30) Priorité: 17.01.2003 FR 0300478
(71) Demandeur: Hispano Suiza, 92700 Colombes (FR)
(72) Inventeur: BECQUERELLE, Samuel, 78570, ANDRESY (FR); PETTINOTTI, Serge, 92400, COURBEVOIE (FR); VILLE, Daniel, 92360, MEUDON LA FORET (FR)
(74) Mandataire: Poulin, Gérard

(57) **Abrégé**

Un satellite (3) est soutenu sur son axe (1) par une grande quantité de paliers répartis, notamment à rouleaux (6), et le montage conserve une bonne capacité de partage de l'effort grâce à une similitude de rigidité entre les parties mutuellement en regard, le long de l'évidement, de l'axe (1) et d'un manchon (7) qui constitue la partie intérieure du satellite (3).

## Description

### DOMAINE TECHNIQUE

Le sujet de cette invention est un agencement de montage d'un satellite épicycloïdal.

Une difficulté permanente rencontrée avec ces dispositifs est la forte charge subie par les paliers unissant le satellite à l'axe qui le soutient et traverse son évidement.

L'agencement classique de montage tournant d'une pièce sur son axe, comprenant une paire de roulements près des extrémités de l'évidement, est donc mal adapté ici car il oblige à utiliser de gros roulements dans une application où le diamètre des satellites est limité par la conception générale du train épicycloïdal. Une solution de remplacement consiste à remplacer la paire de roulements par un palier lisse unique s'étendant à travers sensiblement tout l'évidement, mais la lubrification de ce palier lisse doit être assurée par un débit d'huile et est dispendieuse (US 5 102 379-A donne un exemple de cette conception).

Une autre solution est présentée ici, qui n'implique ni l'emploi d'un palier lisse ni la nécessité d'utiliser des paliers d'un encombrement élevé.

L'agencement comprend des paliers de roulement disposés régulièrement dans l'évidement et en un nombre assez important, au moins trois. On appelle ici palier de roulement, conformément à l'usage normal, un objet mécanique unitaire comprenant un cercle de billes, de rouleaux ou d'autres éléments roulant entre les pièces en rotation qu'elles soutiennent, et reposant sur ces pièces directement ou par l'intermédiaire de bagues ; dans ce dernier cas, le palier peut comprendre d'autres cercles d'éléments roulants parallèles au premier.

La charge transmise par le satellite se répartit entre les paliers, qui peuvent donc être plus petits. Il convient toutefois, pour apprécier justement l'invention, de remarquer que la multiplication de paliers de roulement n'apporte pas forcément une réduction correspondante des efforts qu'ils subissent, ce qui explique la prédominance du montage à deux paliers de roulement : il est impossible en général d'assurer l'égalisation des charges passant par les différents paliers, dont certains sont beaucoup plus sollicités que d'autres, ce qui interdit de réduire leur dimension et contribue donc plutôt à un alourdissement inutile du mécanisme.

Les inventeurs ont cependant constaté que cet inconvénient disparaissait à condition que les manchons de support des paliers, présents sur l'axe et le satellite le long de l'évidement, aient des rigidités semblables à chaque paire de portions situées en regard dans l'évidement. Ainsi, à une déformation quelconque du satellite répond une déformation semblable de l'axe, et les éléments roulants de chacun des paliers, restant tous contraints de la même façon d'un palier à l'autre, continuent de transmettre des charges similaires.

Les éléments roulants choisis en pratique sont le plus souvent des rouleaux, qui transmettent des charges plus élevées que des billes, et pour lesquels la similitude des rigidités des parties en regard des manchons de l'axe et du satellite est encore plus nécessaire, puisque le contact des rouleaux s'effectue sur des lignes et qu'un défaut de parallélisme des manchons, consécutif à des déformations différentes, produit tout de suite une altération de la capacité de transmission des forces par les rouleaux concernés. L'emploi de rouleaux aide aussi à respecter la petitesse souhaitée des paliers et de l'agencement en général. Il est alors préconisé que des pistes de roulement des rouleaux soient situées sur les manchons eux-mêmes, l'un des manchons étant entaillé auxdites pistes et l'autre restant lisse, aucune bague n'étant donc employée.

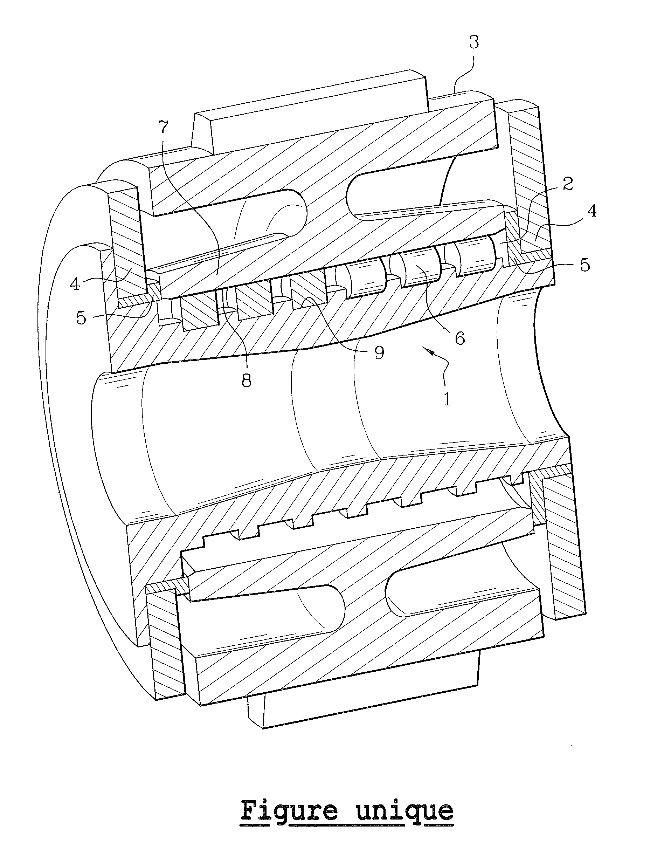

L'invention sera maintenant décrite en rapport à la figure unique.

Un axe 1 creux est enfoncé dans un évidement 2 traversant un satellite 3 épicycloïdal. Des joues 4 munies de butées 5 maintiennent le montage du satellite 3 autour de l'axe 1 en direction axiale. Des roulements à rouleaux, ici au nombre de six, sont disposés dans l'évidement 2 de distances égales, et ils portent la référence générale 6. Le satellite 3 comprend un manchon intérieur 7 dont la surface interne 8, cylindrique, sert de pistes de roulement aux rouleaux 6. L'axe 1 de support du satellite 3 est creux, en forme de manchon, et doté d'entailles circulaires 9 sur sa surface extérieure, dont les fonds servent de pistes de roulement intérieures aux rouleaux 6, qui perdent ainsi la faculté de se déplacer latéralement.

Un trait essentiel de l'invention est la similitude de rigidité du manchon 7 du satellite 3 et du manchon constitué par l'axe 1. Plus précisément, les portions en regard de ces deux manchons de part et d'autre de l'évidement 3 ont des épaisseurs voisines s'il sont construits en matériaux analogues ou identiques?ce qui est usuel. Ainsi, à la forme fuselée du manchon 7, plus fin aux extrémités et plus épais au centre, où il se raccorde au reste du satellite 3, répond une forme pareillement fuselée de l'axe 1 s'amincissant en s'approchant des extrémités de l'évidement 2. On conçoit que cette disposition favorise la similitude de la courbe de déformation des deux manchons et donc le maintien d'un partage équitable de la charge transmise entre les rouleaux 6. La présence de bagues joignant plusieurs rangées des rouleaux 6 pourrait perturber cette répartition régulière des efforts. Il faudrait alors vérifier que la similitude des déformations produites de chaque côté des rouleaux 6 reste respectée pour chacun des cercles des rouleaux 6.

Il est manifeste qu'un effet semblable d'égalité des déformations entre les deux manchons (ou plus généralement entre l'axe et le satellite) peut être obtenu en respectant d'autres critères qu'une similitude d'épaisseurs, selon les circonstances et notamment si les matériaux sont différents, en présence de raidisseurs, etc.

## Revendications

1. Agencement de montage d'un satellite (3) épicycloïdal, comprenant un évidement (2) à travers le satellite, un axe (1) disposé à travers l'évidement, et des paliers (6) disposés dans l'évidement, **caractérisé en ce que** les paliers sont au moins trois, disposés régulièrement dans l'évidement et composés d'éléments roulants, et **en ce que** l'axe (1) et le satellite (3) possèdent, le long de l'évidement, des manchons (1,7) de support des paliers, les manchons ayant des rigidités semblables à chaque paire de portions des manchons situées en regard dans l'évidement (2).

2. Agencement de montage d'un satellite épicycloïdal selon la revendication 1, **caractérisé en ce que** les éléments roulants sont des rouleaux et les manchons de support des paliers comportent des pistes de roulement des rouleaux, l'un des manchons étant entaillé auxdites pistes (9).
